# EUROPÄISCHE PATENTSCHRIFT

(11) **EP 1 511 692 B1**
(45) Veröffentlichungstag und Bekanntmachung des Hinweises auf die Patenterteilung: **11.10.2006**
(21) Anmeldenummer: 03755142.1
(22) Anmeldetag: 27.05.2003
(51) Int. Cl.: C02F 1/00

(54) **VERFAHREN ZUR KÜHLUNG ODER ERWÄRMUNG VON STOFFSTRÖMEN, INSBESONDERE VON KLÄRSCHLAMM**
METHOD FOR COOLING OR HEATING MATERIAL FLOWS, IN PARTICULAR SLUDGE
PROCEDE DE REFROIDISSEMENT OU DE CHAUFFAGE DE FLUX DE MATIERES, NOTAMMENT DE LA BOUE

(30) Priorität: 27.05.2002 DE 10223605
(43) Veröffentlichungstag der Anmeldung: 09.03.2005
(73) Patentinhaber: Klein Abwasser- und Schlammtechnik Gmbh, 57548 Kirchen (DE)
(72) Erfinder: SCHMID, Christoph, 51702 Bergneustadt (DE); TOMALLA, Manfred, 57223 Kreuztal (DE)
(74) Vertreter: Schneiders, Josef
(86) Internationale Anmeldenummer: PCT/EP2003/005565
(87) Internationale Veröffentlichungsnummer: WO 2003/099722

(56) Entgegenhaltungen:
- GB-A- 590 007
- GB-A- 1 055 967
- US-A- 3 930 685
- US-A- 4 294 688

## Beschreibung

Die Erfindung betrifft ein Verfahren zur Kühlung von Stoffströmen oder zur schonenden von hitzeempfindlichen Stoffströmen, insbesondere von Klärschlamm, bei welchem der durch eine Wärmeaustauschanlage geförderte Stoffstrom in der Wärmeaustauscheranlage mit Wärmeaustauschflächen in Berührung gebracht wird.

Vor bzw. im Anschluß an thermische Verfahren, bei denen ein Stoff behandelt werden soll, ist es notwendig, diesen schnell und gleichmäßig abzukühlen bzw. zu erwärmen, um verfahrenstechnische Randbedingungen zur Handhabung des Stoffes oder zum Betreiben des thermischen Verfahrens einhalten zu können. Als Beispiel soll die Trocknung von Klärschlamm bei hohen Temperaturen dienen. Im Anschluß an die Trocknung muß das Trockengut kontrolliert und gleichmäßig abgekühlt werden, um eine Selbstentzündung des brennbaren Klärschlammes zu vermeiden. Dies kann mit Hilfe von Kühlschnecken durchgeführt werden, die einen doppelwandigen Trog haben, der von Kühlmedium durchflossen wird. Um die kühlende Oberfläche zu erhöhen, wird üblicherweise auch die Schneckenwendel doppelwandig ausgeführt und zusammen mit der Schneckenwelle von Kühlmedium durchflossen. Trotz des hohen Aufwandes ist es insbesondere bei niedrigen Temperaturdifferenzen oft nicht möglich, das zu kühlende Gut auf kurzer Strecke und gleichmäßig zu behandeln. Die Kühlschnecke kann nicht durch innen eingelegte Verschleißbleche gegen die stark abrasive Wirkung des getrockneten Klärschlamms geschützt werden, da ansonsten die Wärmeübertragung stark beeinträchtigt würde. Die Gelenkköpfe zum Einleiten des Kühlmediums in die Welle und die Wendel der Schnecke sind aufwendig und stellen einen anfälligen Schwachpunkt dar. Der schlechte Wirkungsgrad der Wärmeübertragung verlangt einen großen Volumenstrom an Kühlmedium, um den gewünschten Abkühleffekt zu erzielen.

Teils ist aber auch die Wärmeübertragung an einen hitzeempfindlichen Stoffstrom ein Problem, wie sie beispielsweise zur Aufheizung im Zuge der Trocknung zur Anwendung gelangt. Insbesondere können sich Probleme explosions- und brandschutztechnischer Art beispielsweise durch Staubaufwirbelung und/oder Selbstentzündung ergeben.

Aufgabe dieser Erfindung ist es, ein Verfahren zur gezielten Temperaturänderung von Stoffströmen bereitzustellen, bei dem die vorbeschriebenen Nachteile vermieden werden: Große, aufwendige Apparate, bei denen teils zur Intensivierung des an sich schlechten Wärmeaustausches das Gut zwangsweise in Kontakt mit stationären Übertragerflächen gebracht werden muss, wobei vielfach eine mechanische Zerstörung der Partikel des Stoffstroms und erheblicher Verschleiß an der Wärmeübertragungsapparatur die Folge sind, teils große Fluidströme energieaufwendig umgewälzt werden müssen, und explosions- und brandschutztechnische Probleme zu lösen sind.

Erfindungsgemäß wird die Änderung der Temperatur des Stoffstromes durch die Nutzung eines Hilfsstoffes erreicht, der in intensiven Kontakt mit dem Stoffstrom gebracht wird, innerhalb einer vorzusehenden Verweilzeit mit diesem Wärme austauscht und so zu der angestrebten Temperaturänderung führt. Danach wird der Hilfsstoff vom Produkt abgeschieden. Dies ist insbesondere dann sinnvoll, wenn der Hilfsstoff wesentlich preiswerter oder wesentlich weniger schonend erwärmt oder abgekühlt werden kann als das Produkt selbst. Der Hilfsstoff ist dabei in der Regel ein festes Schüttgut, das sich vom Stoff des Stoffstromes insbesondere durch die Größe seiner Einzelpartikel unterscheidet. Damit wird erreicht, dass dieser Hilfsstoff leicht vom zu behandelnden Stoffstrom abgeschieden werden kann. Erfindungsgemäß soll ein sehr breiter Begriff für Hilfsstoff zur Anwendung kommen: Einerseits sollen klassische Ensembles von Partikeln aus makroskopisch gleichförmigem Material mit einer Partikelgrößenverteilung verstanden werden, die etwa durch Brechen und Siebung oder Pelletierung gewonnen werden, wie Gesteinssplitt, andererseits aber auch eine Anzahl von Formkörpern, die in sich homogen, aber auch inhomogen oder sogar strukturiert sein können, beispielsweise gleichartige metallische Hohlkörper, die mit einem Fluid gefüllt sind. Massenstrom und Temperatur des Hilfsstoffes wird in Abhängigkeit vom zu behandelnden Stoffstrom, der gewünschten Temperatur und der thermodynamischen Stoff-und Wärmeübertragungsparameter eingestellt. Der Hüfsstoff wird im allgemeinen im Kreislauf geführt und danach regeneriert. Wird nur eine Erwärmung oder eine Abkühlung des zu behandelnden Stoffstromes angestrebt, dann sind der Stoffstrom und der Hilffstoff jeweils so beschaffen, dass sie nicht miteinander chemisch reagieren. Der Austausch wird hier also lediglich durch einen konduktiv-konvektiven Wärmeübergang zwischen dem zu behandelnden Stoffstrom und Hilfsstoff bewirkt. Treibendes Gefälle ist dann hierbei ausschließlich der Temperaturunterschied zwischen Stoffstrom und Hilfsstoff.

In besonderen Ausformungen der Erfindung können aber auch weitere physikalische oder auch chemische Effekte zum Tragen kommen, die einerseits den Wärmeübergang intensivieren, andererseits aber auch erwünschte Begleiteffekte erzielen können: So kann der Hilfsstoff aus kleinen Hohlkörpern ("Heat pipes") bestehen, die mit einer leicht siedenden Flüssigkeit gefüllt sind, die beim Abkühlen des Produkts verdampft und beim Regenerieren des als Hilfsstoffes wieder kondensiert wird. Weitere Beispiele sind die Nutzung von Hydratationswärmen von Mineralien, aber auch die Adsorption/Desorption von Wasser an Zeolithen. In diesen Fällen kommt zum Wärmeaustausch auch noch ein angestrebter Stoffaustausch.

Vorteilhaft ist die große, stets neu regenerierte Oberfläche, die bei der erfindungsgemäßen Wärmeübertragung zur Wirkung kommt, die Möglichkeit einer mechanisch äußerst schonenden Behandlung des zu behandelnden Stoffstroms, sowie der einfache Aufbau der gesamten Apparatur (siehe Abbildung).

Der zu behandelnde Stoffstrom, Stoff A, wird einem Wärmeübertragungsapparat 1 zugeführt, in dem bereits das vorgenannte Schüttgut, also der konditionierte Hilfsstoff F, vorgelegt wurde. Aufgabe des Apparates 1 ist neben dem in Kontakt bringen der Ströme A und F, dafür zu sorgen, dass die miteinander in Kontakt gebrachten Ströme eine ausreichende Verweilzeit miteinander zubringen, so dass der angestrebte Wärmeaustausch bewirkt wird. Dies setzt voraus, dass Apparat 1 in der Regel als ein geeigneter Transportapparat ausgeführt ist.

Manchmal kann es jedoch sinnvoll sein, daß erst der zu behandelnde Stoffstrom vorgelegt und anschliessend der Hilfsstoff zugegeben wird. Dies hängt vom Verhalten des Stoffstrom bei Temperaturschwankungen und Konzentrationsunterschieden ab (Verkleben, Verklumpen etc.).

Auf dem Weg zur Entnahmestelle während des Transportes innerhalb des Apparates 1 wird die Mischung von Stoff A und Hilfsstoff F in Abhängigkeit von der anzustrebenden Beschaffenheit von A optimiert, und zwar im Sinne einer gezielten mechanischen Behandlung von A, beispielsweise äußerst schonend, bei gleichzeitiger Maximierung des Wärmeübergangs zwischen A und F. Beispielsweise erhält man in einer doppelläufigen Schnecke eine permanente, intensive Mischung, wobei aber eventuell der Stoff A zerkleinert wird, während auf einem sehr langen Bandförderer eine Mischung minimal ist, dafür wird A aber in besonderer Weise geschont. Eine Mischform stellen beispielsweise Bandförder-Kaskaden, dar, bei denen jeweils beim Abwurf vom einen auf das nächste Band gleichsam eine "schürende" Wirkung im Sinne einer Intensivierung des Wärmeübergangs erreicht wird, während nur hier, wenn überhaupt, der Stoff A mechanisch beansprucht wird. In jedem Fall erfolgt ein Wärmeaustausch über die relativ große Kontaktoberfläche zwischen Hilfsstoff und Stoff, bis sich die gewünschte Endtemperatur einstellt. Mit dieser Temperatur verlässt das Produkt B, das aus A durch Behandlung zusammen mit F im Apparat 1 erhalten wurde, den Wärmeübertragungsapparat 1, wobei der aus F durch Aufheizung oder Abkühlung erhaltene Hilfsstoff E durch eine Separationseinrichtung (Sieb) vom Produkt B durch den starken Unterschied der Partikelgröße bzw. des Aggregatzustandes hinreichend sauber abgetrennt werden kann. Der Hilfsstoff E verlässt den Wärmeübertragungsapparat am Ende und wird in den Konditionierungsapparat 3 übergeben, wo er durch Kühlung oder Aufheizung, beispielsweise mit einem Kühl-/Heizmedium C, wieder auf die notwendige Temperatur gebracht wird. Falls A und F chemisch miteinander reagieren, ist im Apparat 3 auch eine chemische Regenerierung vorzusehen. Dann wird der Hilfsstoff vom Transportapparat 2 zum Eingang in den Wärmeübertragungsapparat 1 gefördert. Vielfach wird es möglich sein, den Transportapparat 2 und die Konditionierung 3 miteinander zu kombinieren, beispielsweise indem 2 als Siebband ausgeführt wird, das im Querstrom zur Förderrichtung von dem Kühl- oder Heizmedium durchströmt wird. Das Kühl-/Heizmedium C wird dem Konditionierungsapparat 3 zugeführt und verlässt, nachdem der Hilfsstoff auf die notwendige Temperatur gebracht wurde, den Apparat im Zustand D. Gegebenenfalls kann das Kühl-/Heizmedium ebenso im Kreislauf geführt und durch einen Kühl-/Heizapparat auf den Eingangszustand C gebracht werden.

Im folgenden wird ein Beispiel für die Kühlung von thermisch getrocknetem Klärschlamm besprochen, bei dem der heiße Klärschlamm mit Temperaturen über 120 °C in eine handelsübliche und mit Verschleißschutz versehene Förderspirale normalen Durchmessers abgeworfen werde. In der Förderspirale werde Quarzkies mit einem Korndurchmesser von über 20 mm vorgelegt, der auf ca. 20 °C abgekühlt wurde. Während des Transportes wird der Klärschlamm durch Umschichten und Mischen mit den Quarzkiespartikeln auf die unkritische Temperatur von 80 °C abgekühlt. Wird für den getrockneten Klärschlamm eine spezifische Wärme von etwa 0,8 kJ/kgK angenommen, für die Kieselsteine eine Wärmekapazität von 1 kJ/kgK, dann beträgt die minimal einzusetzende Kiesmenge 80%, bezogen auf den Massenstrom getrockneten Klärschlamms. Im Sinne einer Maximierung der Austauschfläche kann es vorteilhaft sein, den Volumenstrom des Hilfsstoffes zu erhöhen. Am Ende der Förderspirale wird der Klärschlamm durch ein Schlitzblech mit 10 mm Schlitzweite zum Weitertransport abgeworfen. Der Quarzkies wird weitergefördert und am Ende des Spiralförderers in ein Wasserbad abgeworfen. Dort sinkt er auf ein Stollenband, das ihn aus dem Wasserbad heraustransportiert. Auf dem Weg gibt der warme Kies die Wärme an das Wasser ab und kühlt sich wieder auf die Anfangstemperatur wie oben genannt ab. Um dies zu unterstützen, kann der Kies nach Verlassen des Wasserbades durch Besprühen mit kaltem Wasser und anschliessenden Trockenblasen mit Hilfe eines Ventilators weiter intensiv gekühlt werden. Der kalte Kies wird dann wieder in den Spiralförderer vorgelegt.

Nicht nur die Kühlung eines Produktes mit diesem Verfahren ist denkbar, auch die Erwärmung eines Produktes kann einfacher und homogener erfolgen. So kann durch die erfindungsgemäße Wärmeübertragung z. B. Klärschlamm, der bei niedrigen Temperaturen schonend und ohne Notwendigkeit einer Abluftbehandlung getrocknet wurde schnell auf Temperaturen z. B. über 80 °C gebracht und für die für die Hygienisierung notwendige Zeit in Mischung gehalten werden. Anschliessend kann in einer weiteren erfindungsgemäßen Wärmeübertragung der Schlamm auf Lagertemperaturen z. B. unter 50 °C gekühlt werden. Es ist denkbar, daß in diesem Fall die zur Aufheizung für die Hygienisierung notwendige Wärme der anschliessenden Kühlung entnommen wird, indem eine Wärmepumpe eingesetzt wird.

Als Hilfsstoff kann von Kies über wohlgeformte Edelstahlkugeln mit oder ohne Beschichtung jeder Feststoff genommen werden, der sich nur soweit in der Größe von dem zu behandelnden Gut unterscheidet, so daß er von diesem abgetrennt werden kann. Bei der Behandlung von Gasen und Flüssigkeiten ist selbst die Größe von untergeordneter Bedeutung.

Der Wärmeübertragungsapparat 1 muß, wie bereits gesagt, kontinuierlich die Stoffströme A und F durchsetzen und dafür sorgen, dass diese für eine ausreichende Verweilzeit miteinander in Kontakt bleiben.. Dies wird in der Regel dadurch erreicht, dass der Apparat 1 eine Transportfunktion übernimmt.

Es ist aber auch ein Batch-Betrieb mit chargenweiser Beladung und Entleerung möglich, wobei während des Vermischens von Stoff und Hilfsstoff im Wärmeübertragungsapparat bereits die Vorbereitung der nächsten Ladung Hilfsstoff im Konditionierungsapparat möglich ist, während die letzte Charge Stoff noch in einem getrennt angeordneten Separationsapparat vom Hilfsstoff abgetrennt wird.

Der Konditionierungsapparat kann beispielsweise ein Wasserbad sein, in dem der Hilfsstoff durch konvektive Wärmeübertragung auf die gewünschte Temperatur gebracht wird. Es ist aber auch denkbar, daß durch indirekte natürliche oder künstliche Beeinflussung der Hilfsstoff konditioniert wird (Sonnenstrahlung, Mikrowelle etc.).

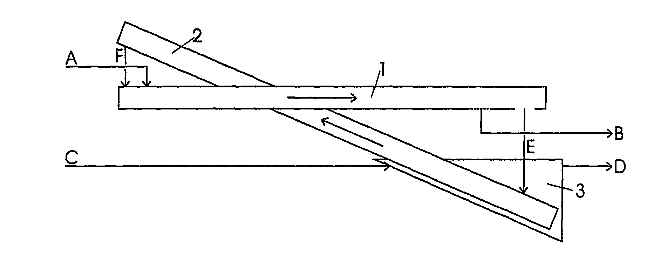

Legende der beiliegenden Zeichnung:
- A -: Input des zu behandelndes Gutes
- B -: Output des auf die gewünschte Temperatur gebrachten Gutes
- C -: Input des Wärme-/Kälteträgers
- D -: Output des Wärme-/Kälteträgers
- E -: Übergabe des Hilfsstoffes von der Wärmeübertragung zur Konditionierung
- F -: Vorlage des konditionierten Hilfsstoffes in den Wärmeübertragungsapparat

- Wärmeübertragungsapparat, in dem das zu behandelnde Gut A mit dem konditionierten Hilfsstoff F gemischt und auf die gewünschte Temperatur gebracht und transportiert wird, bevor es bei der gewünschten Temperatur als Produkt B entnommen werden kann.
- Transportapparat, mit dem der Hilfsstoff E, der den Wärmeübertragungsapparat 1 zusammen mit den Produkt B verlässt, durch den Konditionierungsapparat 3 bis zum Abwurf als konditionierter Stoff F zurück in den Wärmeübertragungsapparat 1 gefördert wird.
- Konditionierungsapparat, in dem der Hilfsstoff E unter Nutzung des Wärme-/ Kälteträgers C auf die gewünschte Kondition F gebracht wird, bevor er wieder mit dem zu behandelnden Gut A gemischt wird.

## Patentansprüche

1. Verfahren zur Kühlung oder zur schonenden Erwärmung von Klärschlamm, wobei der Klärschlamm mit in einem Kreislauf geförderten Hilfsstoffkörpern in Kontakt gebracht wird, **dadurch gekennzeichnet, daß** unter Verwendung eines Fördermittels der Klärschlamm zusammen mit den zugesetzten Hilfsstoffkörpern eine Förderstrecke durchläuft, wobei während des Transports der Klärschlamm und die Hilfsstoffkörper zum Zwecke des Wärmeaustauschs kontinuierlich umgeschichtet und durchmischt werden und wobei die Hilfsstoffkörper nach dem Durchlaufen der Förderstrecke von dem Klärschlamm abgetrennt, regeneriert und in den Kreislauf zurückgegeben werden.

2. Verfahren nach Anspruch 1, **dadurch gekennzeichnet, daß** als Hilfsstoff eine Schüttung von mineralischen Körnern, insbesondere von Quarzkies verwendet wird.

3. Verfahren nach Anspruch 1, **dadurch gekennzeichnet, daß** Hilfsstoff eine Schüttung aus Metallkörpern, insbesondere aus Edelstahlkugeln, verwendet wird.

4. Verfahren nach den Ansprüchen 1 und 3, **dadurch gekennzeichnet, daß** die als Hilfsstoff verwendeten Teilkörper als Hohlkörper ausgebildet sind, die ein bei der Erwärmung des Hohlkörpers verdampfendes und bei der Kühlung des Hohlkörpers kondensierendes Medium enthalten.

5. Verfahren nach Anspruch 1, **dadurch gekennzeichnet, daß** das Fördermittel eine Förderschnecke ist.

6. Verfahren nach Anspruch 1, **dadurch gekennzeichnet, daß** das Fördermittel eine Bandfördererkaskade umfaßt.

7. Verfahren nach Anspruch 1 oder 2, **dadurch gekennzeichnet, daß** die Hilfsstoffkörper mittels eines Schlitzbleches von dem Klärschlamm abgetrennt werden.

8. Verfahren nach Anspruch 7, **dadurch gekennzeichnet, daß** die Hilfsstoffkörper nach der Abtrennung von dem Klärschlamm von dem Fördermittel zur Regenerierung in ein Wasserbad abgeworfen werden.

9. Verfahren nach Anspruch 8, **dadurch gekennzeichnet, daß** die regenerierten Hilfsstoffkörper dem Wasserbad entnommen, trocken geblasen und dann dem Klärschlamm wieder zugesetzt werden.

## Claims

1. A method of cooling or carefully heating sewage sludge, wherein the sewage sludge is brought into contact with accessory material bodies conveyed in a circuit, **characterised in that** the sewage sludge together with the added accessory material bodies passes through a conveyor section, with the use of a conveyor means, wherein during the transport operation the sewage sludge and the accessory material bodies are continuously rearranged and thoroughly mixed for the purposes of heat exchange and wherein after passing through the conveyor section the accessory material bodies are separated from the sewage sludge, regenerated and returned to the circuit.

2. A method according to claim 1 **characterised in that** a loose fill of mineral grains, in particular quartz gravel, is used as the accessory material.

3. A method according to claim 1 **characterised in that** a loose fill of metal bodies, in particular high-quality steel balls, is used as the accessory material.

4. A method according to claims 1 and 3 **characterised in that** the partial bodies used as the accessory material are in the form of hollow bodies which contain a medium which evaporates upon heating of the hollow body and condenses upon cooling of the hollow body.

5. A method according to claim 1 **characterised in that** the conveyor means is a conveyor screw.

6. A method according to claim 1 **characterised in that** the conveyor means includes a belt conveyor cascade.

7. A method according to claim 1 or claim 2 **characterised in that** the accessory material bodies are separated from the sewage sludge by means of a slotted plate.

8. A method according to claim 7 **characterised in that** after separation from the sewage sludge the accessory material bodies are ejected from the conveyor means into a water bath for the regeneration operation.

9. A method according to claim 8 **characterised in that** the regenerated accessory material bodies are removed from the water bath, blown dry and then added to the sewage sludge again.

## Revendications

1. Procédé de refroidissement ou de chauffage soigneux de boue d'épuration, la boue d'épuration étant mise en contact avec des éléments adjuvants transportés dans un circuit, **caractérisé en ce que**, à l'aide d'un moyen de transport, la boue d'épuration conjointement avec les éléments adjuvants ajoutés parcourt une voie de transport, la boue d'épuration et les éléments adjuvants étant continuellement intervertis et mélangés pendant le transport en vue de l'échange de chaleur et les éléments adjuvants étant séparés de la boue d'épuration après le passage dans la voie de transport, régénérés et ramenés dans le circuit.

2. Procédé selon la revendication 1, **caractérisé en ce que** l'on utilise comme adjuvants des grains minéraux en vrac, en particulier, du gravier de quartz.

3. Procédé selon la revendication 1, **caractérisé en ce que** l'on utilise comme adjuvants des corps métalliques en vrac, en particulier, des billes en acier spécial.

4. Procédé selon les revendications 1 et 3, **caractérisé en ce que** les éléments partiels utilisés comme adjuvants sont configurés comme des corps creux qui contiennent un milieu s'évaporant pendant le chauffage du corps creux et se condensant pendant le refroidissement du corps creux.

5. Procédé selon la revendication 1, **caractérisé en ce que** le moyen de transport est une transporteuse à vis sans fin.

6. Procédé selon la revendication 1, **caractérisé en ce que** le moyen de transport comprend une cascade de bandes transporteuses.

7. Procédé selon la revendication 1 ou 2, **caractérisé en ce que** les éléments adjuvants sont séparés de la boue d'épuration à l'aide d'une tôle à fentes.

8. Procédé selon la revendication 7, **caractérisé en ce que**, après la séparation de la boue d'épuration, les éléments adjuvants sont éjectés dans un bain-marie par le moyen de transport pour la régénération.

9. Procédé selon la revendication 8, **caractérisé en ce que** les éléments adjuvants régénérés sont extraits du bain-marie, soufflés pour être séchés et de nouveau ajoutés à la boue d'épuration.
